Europäisches Patentamt

European Patent Office

Office européen des brevets

(11) Publication number: **0 022 886**
A1

# (12) EUROPEAN PATENT APPLICATION

(21) Application number: **79301454.9**

(22) Date of filing: **23.07.79**

(51) Int. Cl.³: **B 60 R 25/02**

(43) Date of publication of application:
28.01.81 Bulletin 81/4

(84) Designated Contracting States:
BE DE FR GB IT NL SE

(71) Applicant: **WILMOT BREEDEN LIMITED**
**Amington Road**
**Birmingham 25(GB)**

(72) Inventor: **Artlett-Coe, John Burton**
**20 Walmley Close**
**Solihull, West Midlands(GB)**

(72) Inventor: **Jeavons, Philip Swingewood**
**88 Ingestre Road**
**Birmingham 28(GB)**

(74) Representative: **Brown, Michael S**
**WILMOT BREEDEN LIMITED Fordhouse Lane Stirchley**
**Birmingham B30 3BW(GB)**

(54) Steering locking mechanisms.

(57) A steering locking mechanism includes a housing containing a key-operated device arranged to rotate with a cam (30) that serves to retract a spring-loaded bolt upon insertion of a key and rotation thereof relative to the housing. The cam (30) is formed with a track (35) in which a slide element (31) is located, the slide element (31) being arranged to interact with the bolt and being slidable within a channel (36) in the housing.

The mode of operation is such that the movements required to effect withdrawal of the key and displacement of the bolt into its locking position comprises rotation of the key and cam (30) from the "ON" position into the "AUXILIARIES" position, axial movement in the direction of key withdrawal to disengage the slide element (31) from the bolt, return axial movement of the cam (30) but not of the slide element (31), and continued rotary movement of the cam (30) into the "OFF" position in which key withdrawal can be effected.

FIG 9

FIG 10

FIG 11

This invention relates to steering locking mechanisms for motor vehicles and is concerned with that kind of mechanism which includes a housing containing a key-operated device arranged to rotate with a cam which, in use, serves to effect retraction of a bolt against the action of a spring upon insertion of a correct key into the device and rotation of the key relative to the housing.

It is an object of the invention to provide an improved steering locking mechanism of the kind specified.

According to the invention there is provided a steering locking mechanism of the kind specified in which means are provided whereby, when the bolt is in its retracted position and the key is rotated in the direction corresponding to release of the bolt, rotation of the cam and device serves to bring the mechanism into an intermediate blocking condition beyond which further rotation of the device into a position in which withdrawal of the key can be effected is prevented, said blocking being releaseable by axial movement of the cam and device in the direction opposite to that in which the key is withdrawn.

The cam preferably has a track in which a slide element is located, said slide element being slideable in a channel in the housing and axially displaceable, on rotation of the cam, between a position in which it acts to prevent movement of the bolt under the action of its spring loading and a position in which its does not so act.

The construction is preferably such that, on insertion of the key and rotation of the cam, the cam acts to withdraw the bolt, whereafter the cam is moved into a position in which it acts to hold off the bolt against movement under the action of its spring, the mode of interaction between the track in the cam and the slide element being such as to move the slide element into a position in which it acts to prevent movement of the bolt and to stop return rotary movement of the cam in said intermediate blocking condition.

Preferably, the arrangement is such that, prior to movement of the cam and device in the direction opposite to that in which the key is withdrawn, it is necessary to effect movement of the cam and slide element in the direction of key withdrawal. The movements required to effect withdrawal of the key and displacement of the bolt into its locking position thus preferably comprise rotation of the key and cam from the "ON" position into the "AUXILIARIES"
position, axial movement in the direction of key withdrawal to disengage
the slide element from the bolt, return axial movement of the cam but not
of the slide element, and continued rotary movement of the cam into the
"OFF" position in which key withdrawal can be effected.

The invention will now be described by way of example with reference to the
accompanying drawings in which:-

Figure 1 is a plan view of a steering locking mechanism,

Figure 2 is a sectional view of the mechanism along the line
A-A of Figure 1,

Figure 3 is a sectional view of the mechanism along the line
B-B of Figure 1,

Figure 4 is a sectional view of the mechanism housing along the line
C-C of Figure 1,

Figure 5 is an end view of a cam forming part of the mechanism,

Figure 6 is a plan view of the cam,

Figure 7 shows the other end of the cam,

Figure 8 is a side view of the cam,

Figure 9 illustrates the form of a track in the cam and its
interaction with a slide element,

Figure 10 is a side view of the slide element, and

Figure 11 is a sectional view illustrating engagement of the slide
element in a channel in the housing.

The steering locking mechanism has a housing 10 which is formed as a die-
casting from a zinc-based alloy, housing 10 including a main body portion 11
of stepped cylindrical form and a tubular portion 12 within which a cam 30
and a key-operated device are located.  The axis of the tubular portion 12
is at right angles to and offset from the axis of the main body portion 11
which is fixedly attached to the vehicle steering column 14 by means of
fasteners 15.  Within the main body portion 11 there is an annular wall 16
which is provided, at its inner periphery, with a cylindrical lip 17 which
affords a seating for a flanged bearing 18 that fits around and supports the
vehicle steering shaft 19.

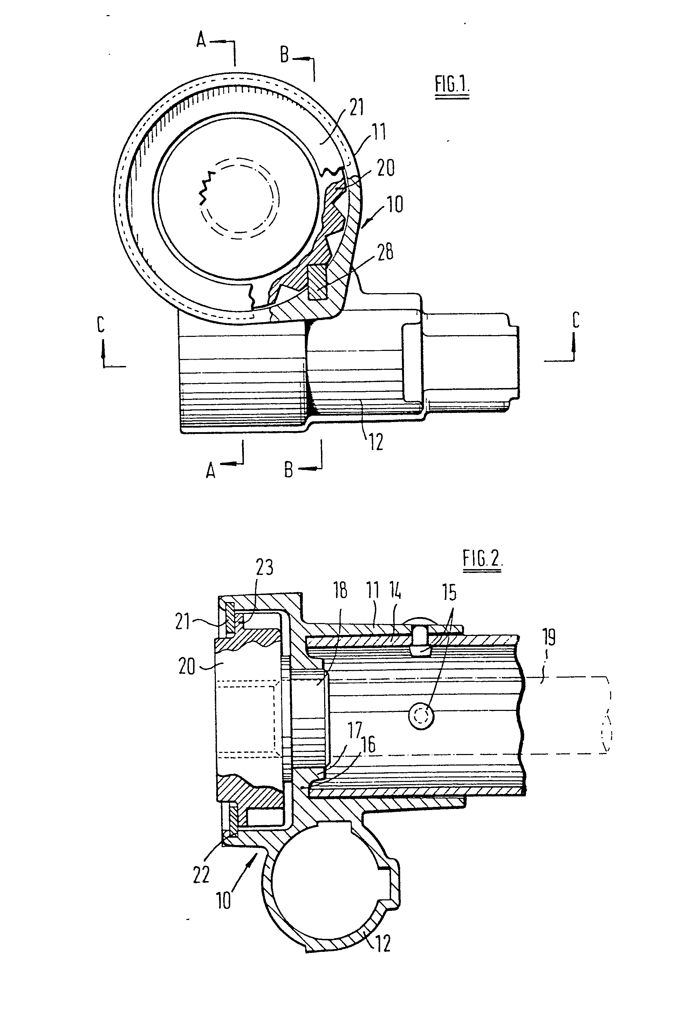

As shown in Figures 1 to 3, the main body portion 11 includes a chamber within
which an annular externally toothed element 20 is located by means of a fixing
ring 21 fitted into the end of the chamber so as to abut against an internal shoulder 22 of the main body portion 11 and against a collar 23 of the annular element 20. Keying means (not shown) act between the annular element 20 and the steering shaft 19 to prevent relative rotation therebetween, which keying means may take the form of a flat on the shaft and a complementary formation on the element 20.

A bolt 24 acted on by a spring 25 is located within a bore 26, the spring 25 acting between a closure plate 27 and the bolt 24 to urge the bolt 24 towards the annular element 20 so that, when the orientation of the steering shaft 19 is such that a nose portion 28 of the bolt 24 is aligned with the space between two adjacent teeth on the annular element 20, said nose portion 28 will enter this space and a locking action will be obtained. The bolt 24 is of rectangular cross-section but includes a shoulder 29 intermediate its ends such that the end of the bolt 24 acted on by the spring 25 is larger than the other end thereof. The shoulder 29 co-operates with a cam 30 and with a slide element 31 in the manner described below in detail.

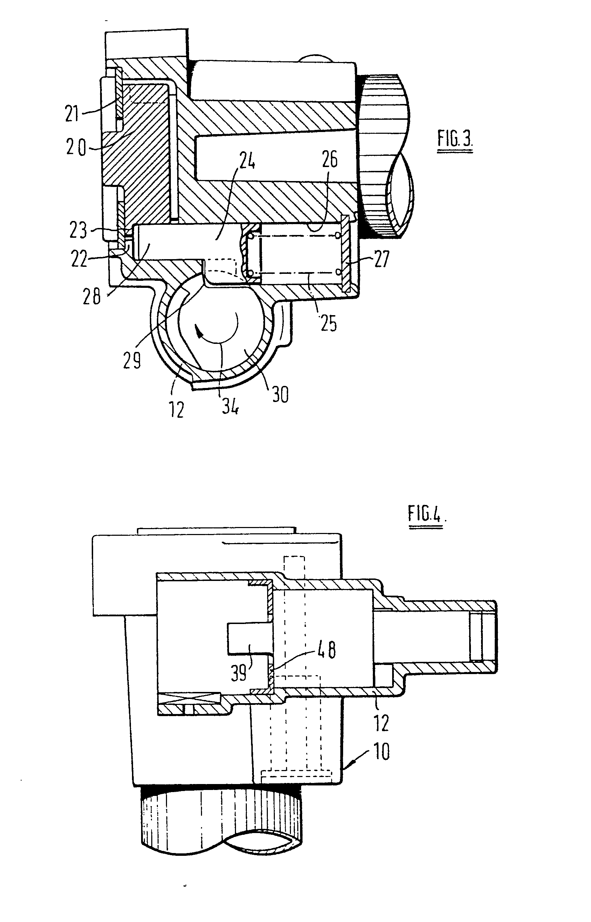

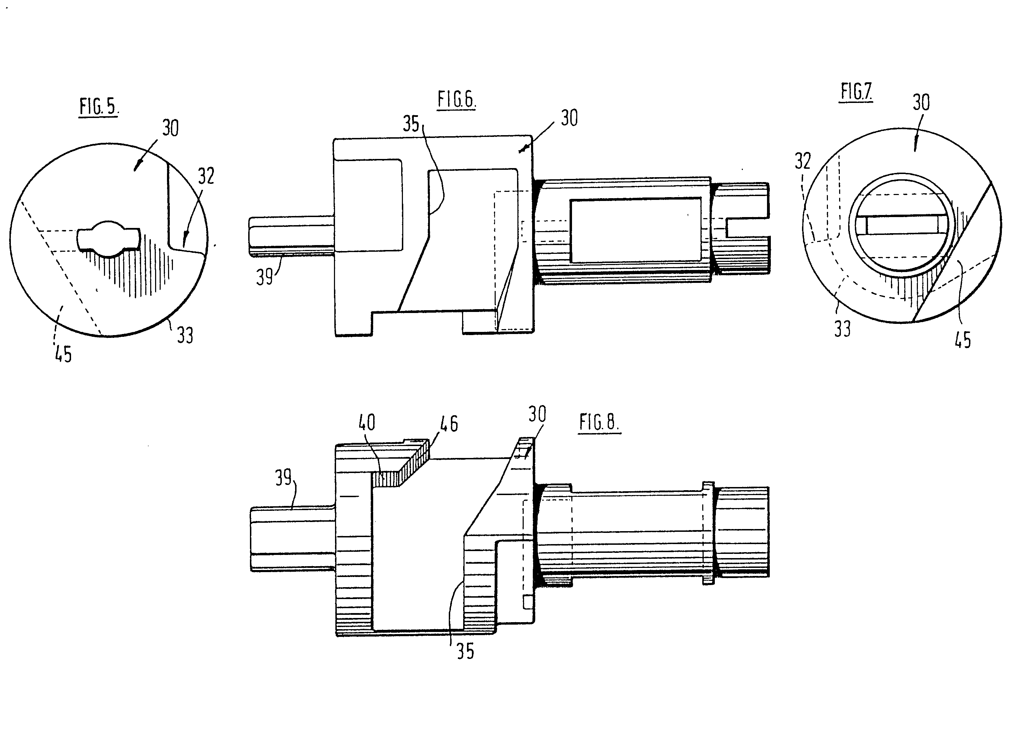

In the locked condition of the mechanism, the cam 30 is in the position shown in Figure 3 and the spring 25 urges the bolt 24 into engagement with the toothed element 20. When, however, the key (not shown) is inserted and turned, the cam 30 is rotated in the direction indicated by the arrow 34 in Figure 3 and a lifting face 32 on the cam 30 engages the shoulder 29 to displace the bolt 24 against the action of the spring 25, the bolt 24 then being held in this position by a part-cylindrical portion 33 of the cam profile.

The mode of intersection of the bore 26 in which the bolt 24 is located and the chamber containing the toothed annular element 20 is such that a rebate is afforded in the cylindrical wall of said chamber to receive the nose portion 28 of the bolt 24. The bolt 24 is moved by the spring 23 in a direction parallel to the axis of the steering shaft 19 and the angle between two adjacent tooth faces is $92^{\circ}$, i.e. $90^{\circ}$ plus a clearance factor. The nose portion of the bolt 24 is thus located, in the locked condition, in a rebate of rectangular cross-section with one corner thereof disposed between the two tooth faces and with the opposite corner thereof disposed between two wall surfaces of the main body portion which extend at substantially $90^{\circ}$ to one another. Thus, if a torque is applied to the steering shaft 19 when the nose portion 28 of the bolt 24 is in its engaged or locked position, this torque will be transmitted via the annular element 20 of the nose portion 28 to effect compression of the nose portion 28 between one or other of said two tooth faces and the opposite wall surface of the main body portion 11. Since the nose portion is substantially solely in compression, it is able to withstand considerably greater loads than would be the case if it were subjected to shear loads or tensile loads. In addition, the point of engagement between the bolt 24 and the annular element 20 is at a greater spacing from the axis of the steering shaft 19 than the point of engagement between a bolt and a sleeve of a conventional steering column lock, thereby enabling an inherently stronger structure to be obtained.

As shown in Figure 1, there are eighteen teeth on the element 20 at an angular spacing of $20^{\circ}$ so that, if the bolt 24 is not initially aligned with the space between two adjacent teeth when the locking device is operated to return the cam 30 to the position shown in Figure 3, the spring 25 will act to urge the nose portion 28 of the bolt 24 continuously against the annular element 20 and engagement of the bolt 24 will be effected when the steering wheel is turned through, at most, $20^{\circ}$. This is in contrast with conventional steering column locks in which the sleeve fixed to the steering shaft has a single hole such that locking can only be obtained when the front wheels of the vehicle are in a straight-ahead position.

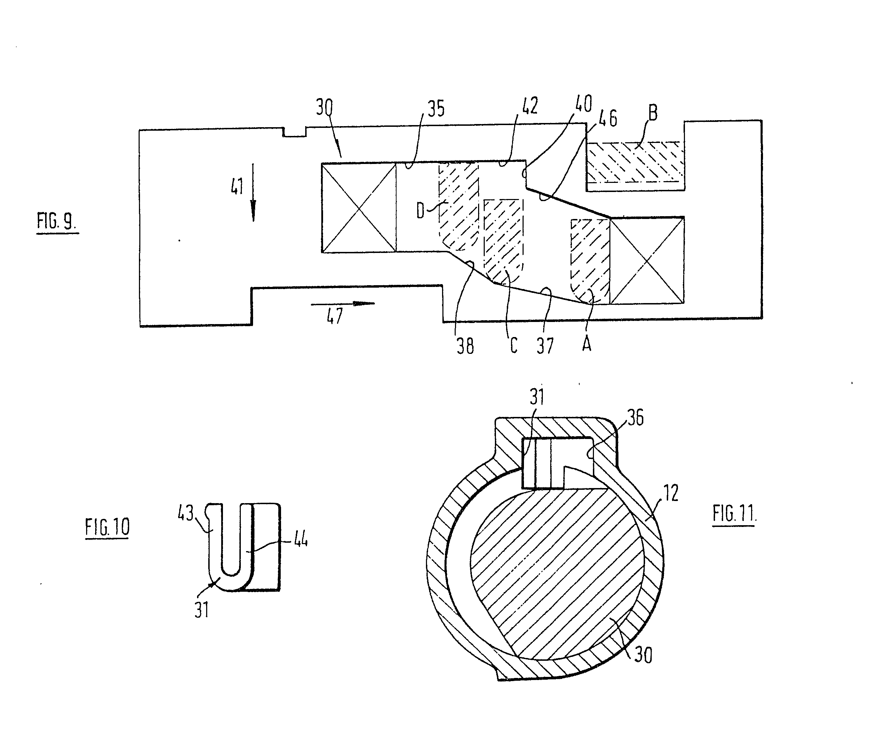

Referring now to Figure 9, which shows the form of a track 35 in which the slide element 31 is located, the slide element 31 is disposed initially, i.e. when the bolt 24 is in its extended position, in a position indicated at A at one end of a channel 36 formed in the wall of the tubular portion 12. When the key is inserted and the cam 30 is rotated, relative movement is effected between the cam 30 and slide element 31 with the cam 30 moving in the direction indicated in Figure 9 by the arrow 47. During rotation of the cam 30 to effect withdrawal of the bolt 24, an inclined surface 37 of the cam 30 initially produces movement of the slide element 31 towards the bolt into the position indicated at C. By the time that position C is reached, the lifting face 32 will have acted on the shoulder 29 to effect complete retraction of the bolt 24 which will then be held off, against return movement under the action of the spring 25, by its engagement with the cylindrical surface portion 33 of the cam 30.

With continued rotation of the cam 30, the slide element 31 is engaged by a second inclined surface 38 of the cam 30 and the slide element 31 is moved into the position indicated at D in which it also then acts on the shoulder 29 to hold off the bolt 24. The cam 30 can then be turned to bring the vehicle electrical system into the "ON" or "START" position, the cam 30 having a coupling portion 39 by which it is connected to a switch actuator and the cam 30 being located within the tubular portion 12 of the housing 10 by means of a retaining element 48.

Throughout the above movements, the slide element 31 is retained in the channel 36 so that the movements of the slide element 31 relative to the housing 10 are purely linear movements. When the key is turned from the "ON" position towards the "OFF" position, the cam 30 moves relative to slide element 31 such that in the "AUXILIARIES" position, the slide element 31 abuts a shoulder 30 within the cam track 35 and further rotary movement of the cam 30 is prevented. To obtain continued rotary movement of the cam 30, the slide element 31 must be disengaged from the shoulders 29 and 40, the bolt being illustrated diagrammatically at B in Figure 9. The cam 30 must thus be moved first in the direction of key withdrawal, in the direction indicated by the arrow 41, to disengage from the shoulder 29 on bolt B and then in the opposite direction to disengage from the shoulder 40. During movement of the cam 30 in the direction of the arrow 41, a wall 42 of the track 35 physically displaces element 31 along the channel 36 in the housing. On the other hand, when the cam 30 is moved axially in the opposite direction, the slide element 31 remains stationary.

In order to ensure that the slide element 31 does, in fact, remain stationary, the coefficient of sliding friction between the slide element 31 and the channel 36 must be considerably greater than the coefficient of sliding friction between the slide element 31 and the cam 30. This is ensured by making the slide element 31 of U-shape in plan with two legs 43 and 44 which are resiliently biassed away from each other into gripping engagement with the side walls of the channel 36. In addition, a small protuberance may be provided at the end of arm 43 to increase the frictional grip that is obtained.

When the cam 30 is displaced axially in the direction of key withdrawal, a projection within the housing enters a rebate 45 of the cam 30 to prevent rotation of the cam 30 relative to the housing in this axial position. Then, when the cam 30 is subsequently pressed in by means of the key this projection is disengaged from the rebate 45 and the slide element 31 is returned to the position indicated at C. When the cam 30 is rotated further, an inclined surface 46 of the cam 30 acts on the slide element 31 to return it to its original position indicated at A.  This is the "OFF" or "LOCK"
position in which the key can be withdrawn.

As described, manual effort is required to effect outward axial movement
of the cam 30 when the key is turned into the intermediate blocking
position described above.  If desired, however, a spring may be arranged
to act on the cam 30 with the rating of the spring just sufficient to
effect said outward axial movement of the cam.  The load on the ward
springs of the locking device is thus reduced.

CLAIMS

1    A steering locking mechanism of the kind which includes a housing
(10) containing a key-operated device arranged to rotate with a cam
(30) which, in use, serves to effect retraction of a bolt (24) against
the action of a spring (25) upon insertion of a correct key into the
device and rotation of the key relative to the housing (10), characterised
in that means are provided whereby, when the bolt (24) is in its retracted
position and the key is rotated in the direction corresponding to release
of the bolt (24), rotation of the cam (30) and device serves to bring the
mechanism into an intermediate blocking condition beyond which further
rotation of the device into a position in which withdrawal of the key
can be effected is prevented, said blocking being releasable by axial movement of the cam (30) and device in the direction opposite to that in which
the key is withdrawn.

2    A steering locking mechanism according to claim 1, wherein the cam
(30) has a track (35) in which a slide element (31) is located, said
element (31) being slidable in a channel (36) in the housing (10) and
axially displaceable, on rotation of the cam (30), between a position in
which it acts to prevent movement of the bolt (24) under the action of its
spring loading and a position in which it does not so act.

3    A steering locking mechanism according to claim 2, wherein, on insertion
of the key and rotation of the cam (30), the cam (30) acts to withdraw the
bolt (24), whereafter the cam (30) is moved into a position in which it
acts to hold off the bolt (24) against movement under the action of its
spring (25).

4    A steering locking mechanism according to claim 3, wherein the mode
of interaction between the track (35) in the cam (30) and the slide element
(31) is such as to move the slide element (31) into a position in which it
acts to prevent movement of the bolt (24) and to stop return rotary movement
of the cam (30) in said intermediate blocking condition.

5    A steering locking mechanism according to claim 2, wherein the
arrangement is such that, prior to movement of the cam (30) and device in
the direction opposite to that in which the key is withdrawn, it is necessary
to effect movement of the cam (30) and slide element (31) in the direction
of key withdrawal.

FIG.1.

FIG.2.

FIG. 3.

FIG. 4.

FIG.7  30  45  33  32

FIG.6.  30  35  39

FIG.8.  30  46  40  35  39

FIG.5.  30  32  33  45

FIG. 9.

30    35    42    40 46    B

41

D

47

38    C    37    A

FIG. 10

43

31

44

FIG. 11.

31    36

12

30

4/4

0022886

European Patent
Office

**EUROPEAN SEARCH REPORT**

| | DOCUMENTS CONSIDERED TO·BE RELEVANT | | CLASSIFICATION OF THE APPLICATION (Int. Cl.) |
|---|---|---|---|
| Category | Citation of document with indication, where appropriate, of relevant passages | Relevant to claim | |
| | DE -B1 - 2 747 185 (H. KOLB)<br>* claim 1; fig. 5 *<br>--<br>DE - B - 1 235 168 (J. VOSS)<br>* column 1, line 38 *<br>& GB - A - 995 049<br>--<br>DE - A - 2 056 690 (J. VOSS)<br>* fig. 9 *<br>---- | 1,3,<br>4,5<br><br>1,3,<br>4,5<br><br><br>1,3,<br>4,5 | B 60 R  25/02<br><br><br><br><br><br>TECHNICAL FIELDS<br>SEARCHED (Int.Cl.)<br><br>B 60 R  25/00 |

CATEGORY OF
CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family,
· corresponding document

| | The present search report has been drawn up for all claims | | |
|---|---|---|---|
| Place of search<br>Berlin | Date of completion of the search<br>13-03-1980 | Examiner<br>BECKER | |

EPO Form 1503.1  06.78